# EUROPEAN PATENT APPLICATION

(11) **EP 2 608 447 A2**
(43) Date of publication of application: **26.06.2013**
(21) Application number: 12005726.0
(22) Date of filing: 07.08.2012
(51) Int. Cl.: H04L 9/08, H04L 9/32

(54) **Revocable security system and method for wireless access points**

(30) Priority: 22.12.2011 US 201113334615
(71) Applicant: Broadcom Corporation, Irvine, CA 92617 (US)
(72) Inventor: Scott, Wilkinson, Mountain View CA 94040 (US); Yasantha, Rajakarunanayake, San Ramon CA 94582 (US)
(74) Representative: Jehle, Volker Armin

(57) **Abstract**

Disclosed are various embodiments of a wireless access point.

Embodiments can include establishing a master pre-shared key associated with a wireless network, obtaining a request to establish a connection to the wireless network with a client device and generating a revocable key for the client device that is different from the pre-shared key.

## Description

### BACKGROUND

Many different types of technologies exist for home networking. Wireless access points employing, for example, one or more Institute of Electronics Engineers (IEEE) 802.11 wireless local area networking standards are often used in many home and/or enterprise environments to facilitate access by various client devices to a wide area network or another local area network to which the access point is coupled. Additionally, a wireless network facilitated by such a wireless access point may employ encryption technology that encrypts communication between the client devices and the access point. Encryption technologies that are often employed in a home environment involve the use of a pre-shared key (PSK) from which device specific as well as packet specific keys are derived. Home users may wish to grant access to additional devices that, for example, may belong to other users, visitors, friends and the like.

This can be accomplished by sharing the PSK or a key derived from the PSK with other users, which can be installed or cached on the user's device so that encrypted packets can be exchanged between the client device and the access point. Accordingly, this can be thought of as granting layer 2 access to the wireless network to the client device. However, upon granting layer 2 access in such a manner to a client device that may belong to a visitor, in many prior art embodiments the only way to revoke the device's access to the network is change the PSK that is relied upon by the access point and the remaining client devices in the network to communicate in a secured manner.

### BRIEF SUMMARY OF THE INVENTION

According to an aspect of the invention, a wireless access point comprises:
at least one processor; and
a security application executable by the at least one processor, and security application comprising:
   logic that establishes a master pre-shared key associated with a wireless network, the wireless network associated with a service set identifier (SSID);
   logic that obtains a request to establish a connection to the wireless network with a client device;
   logic that generates a revocable key for the client device, the revocable key being different from the pre-shared key;
   logic that generates an authentication credential based at least upon the revocable key;
   logic that transmits an authentication credential to the client device, the authentication credential based at least upon the revocable key;
   logic that determines whether a revocation event occurs with respect to the client; and
   logic that revokes the revocable key upon occurrence of the revocation event.

Advantageously, the security application further comprises logic that obtains an administrative authorization to grant access to the wireless network to the client device prior to transmitting the authentication credential to the client device.

Advantageously, the security application further comprises:
logic that determines a unique identifier associated with the client device; and
wherein the revocable key is based at least upon the unique identifier.

Advantageously, the authentication credential comprises a pairwise master key.

Advantageously, the revocable key is uniquely associated with the client device, the revocable key generated by the security application.

Advantageously, the logic that obtains the request from the client device to establish the connection to the wireless network further comprises logic that obtains a request to initiate a session in which an authentication credential is generated by the at least one processor and transmitted to the client device.

Advantageously, the session further comprises a Wi-Fi protected setup session.

Advantageously, the security application further comprises logic that secures the wireless network by employing a wireless security protocol, the wireless security protocol comprising one of: Wi-Fi Protected Access and Wi-Fi Protected Access II.

Advantageously, the security application further comprises logic that establishes a communication session associated with the client device, the communication session comprising an encrypted wireless communication session, wherein the encrypted wireless communication session is encrypted using the authentication credential.

Advantageously, the logic that determines whether a revocation event occurs with respect to the client further comprises:
logic that tracks an amount of data usage associated with the client device on the wireless network;
logic that determines whether the data usage exceeds a usage cap; and
logic that identifies a revocation event when the data usage exceeds the usage cap.

Advantageously, the logic that determines whether a revocation event occurs with respect to the client further comprises:
logic that identifies an amount of time elapsed since generating the authentication credential based at least upon the revocable key;
logic that determines whether the amount of time exceeds a predefined threshold; and
logic that identifies a revocation event when the amount of time exceeds the predefined threshold.

Advantageously, the logic that determines whether a revocation event occurs with respect to the client further comprises logic that receives a revocation command associated with at least one of the revocable key and the authentication credential.

Advantageously, the logic that revokes the revocable key upon occurrence of the revocation event further comprises logic that denies access by the client device to the wireless network.

According to an aspect, a method is provided, comprising the steps of:
establishing, in a wireless access point, a master pre-shared key associated with a wireless network, the wireless network associated with a service set identifier (SSID);
obtaining, in the wireless access point, a request to establish a connection to the wireless network with a client device;
generating, in the wireless access point, a revocable key for the client device, the revocable key being different from the pre-shared key;
generating, in the wireless access point, an authentication credential based at least upon the revocable key;
transmitting, in the wireless access point, an authentication credential to the client device, the authentication credential based at least upon the revocable key;
determining, in the wireless access point, whether a revocation event occurs with respect to the client; and
revoking, in the wireless access point, the temporary key upon occurrence of the revocation event.

Advantageously, the method further comprises the step of obtaining, in the wireless access point, an administrative authorization to grant access to the wireless network to the client device prior to transmitting the authentication credential to the client device.

Advantageously, the method further comprises the step of determining, in the wireless access point, a unique identifier associated with the client device, wherein the other key is based at least upon the unique identifier.

Advantageously, the other key comprises a revocable key uniquely associated with the client device, the revocable key generated by the security application.

Advantageously, the step of obtaining, in the wireless access point, the request from the client device to establish the connection to the wireless network further comprises the step of obtaining, in the wireless access point, a request to initiate a session in which an authentication credential is generated by the at least one processor and transmitted to the client device.

Advantageously, the method further comprises the step of securing, in the wireless access point, the wireless network by employing a wireless security protocol, the wireless security protocol comprising one of: Wi-Fi Protected Access and Wi-Fi Protected Access II.

According to an aspect, a system comprises:
means for establishing a master pre-shared key associated with a wireless network, the wireless network associated with a service set identifier (SSID);
means for obtaining a request to establish a connection to the wireless network with a client device;
means for generating a revocable key for the client device, the revocable key being different from the pre-shared key;
means for generating an authentication credential based at least upon the revocable key;
means for transmitting an authentication credential to the client device, the authentication credential based at least upon the revocable key;
means for determining whether a revocation event occurs with respect to the client; and
means for revoking the temporary key upon occurrence of the revocation event.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a drawing of a networked environment including a wireless access point executing a security application according to various embodiments of the disclosure.

FIGS. 2-4 are sequence diagrams illustrating examples of data exchanged between the security application and client devices according to various embodiments of the disclosure.

FIG. 5 is a flowchart illustrating one non-limiting example of functionality implemented as portions of the security application executed in a wireless access point in the networked environment of FIG. 1 according to various embodiments of the present disclosure

FIG. 6 is a schematic block diagram that provides one example illustration of a wireless access point employed in the networked environment of FIG. 1 according to various embodiments of the present disclosure.

### DETAILED DESCRIPTION

The present disclosure relates systems and methods that facilitate granting of temporary or revocable layer 2 access to a wireless network to client devices in a way that leverages existing wireless local area networking standards and technologies. As noted above, IEEE 802.11 standards are often employed to facilitate communication between a wireless network access point and client devices. Additionally, various security protocols can also be employed to secure communications between client devices and a wireless network access point. For example, Wi-Fi Protected Access (WPA), Wi-Fi Protected Access II (WPA2), IEEE 802.11 i, or various other security and encryption protocols are employed to limit access to a wireless network facilitated by the access point by unapproved users and/or devices. Additionally, standards and/or protocols such as Wi-Fi Protected Setup (WPS) are used to facilitate exchange of keys or other authentication information between a client and access point so that a client can access a secured wireless network with minimal setup or user intervention. Additionally, embodiments of the present disclosure are equally applicable to Bluetooth standards, near field communication (NFC) or any other wireless communication standards that can include a security framework involving the use of a pre-shared key.

Users in a home or enterprise environment that employs a wireless security protocol involving the use of a pre-shared key (PSK) can enable access of various client devices to a secured wireless network by configuring the access point with a PSK of their choosing and also configuring the various client devices with the same PSK. According to the various types of wireless security protocols, such as WPA2, the access point and client device then perform a handshake and pairwise keys are generated by each to facilitate subsequent communication over a secured link. Some users may take advantage of access points as well as client devices that implement WPS or similar protocols to potentially streamline the process of enabling communication between a client device and wireless access point. Protocols such as WPS facilitate exchange of information necessary to allow the access point and the client device communicate using a security protocol such as WPA2.

As noted above, if a user who owns and/or administers a wireless access point and thereby access to the network to which it is connected wishes to grant access to additional client devices, the PSK associated with the network service set identifier (SSID) can be entered into a user interface provided on the client device, which can derive any other keys or authentication credentials that may be necessary to securely exchange packets of data with the access point. Additionally, a client device can also be configured with a protocol such as WPS when a user enters a personal identification number (PIN) associated with the access point, activates a physical or virtual button associated with the client or access point to initiate the WPS process, or perform any other initialization flow supported by such a protocol. The result of either process generally involves a persistent association between the access point and the client device to which the user is granting access, at least until a PSK associated with the SSID is changed. In the case of a user wishing to grant access to a visiting client device, such as a device belonging to a friend and/or visitor, this can be a less than desirable result. An administrative user may not desire to create a persistent association between the access point and visiting client device, but may also not wish to have to change the PSK and update the potentially numerous remaining client devices for which the user does desire a persistent association.

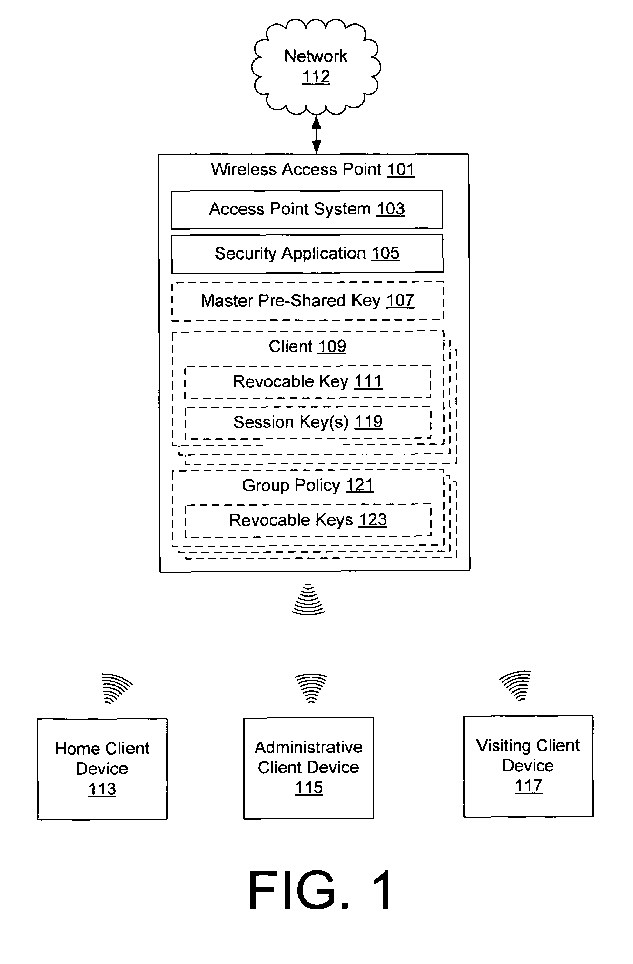

Accordingly, embodiments of the disclosure allow creation of temporary and/or revocable credentials for such a visiting client device in a way that can be implemented with existing IEEE 802.11 standards. Therefore, reference is now made to FIG. 1, which shows one example of a networked environment 100 according to one embodiment of the disclosure. The depicted networked environment 100 includes a wireless access point 101 coupled to a network 112 as well as a plurality of client devices. The network 112 includes, for example, the Internet, intranets, extranets, wide area networks (WANs), local area networks (LANs), wired networks, wireless networks, or other suitable networks, etc., or any combination of two or more such networks. The connection between the wireless access point 101 and the network 112 can comprise a wired connection, such as an Ethernet connection, a wireless connection, such as Wi-Fi and/or any wide or local area wireless networking standard, or any combination thereof.

The wireless access point 101 can comprise a dedicated wireless local area network access point in some embodiments. In other embodiments, the wireless access point 101 can represent a hotspot device, a smartphone including hotspot functionality, mobile access point, or any other equivalent device that provides wireless access point functionality. Additionally, a vehicular or aircraft based wireless access point can also implement the functionality described herein. In some embodiments, the wireless access point 101 can facilitate a publicly accessible wireless network, such as in an airport, coffee shop, or the like.

Therefore, the wireless access point 101 can include an access point system 103, a security application 105, a master pre-shared key 107 a client table 109, which can contain one or more revocable keys 111, session keys 119 and/or other data. The access point 101 can provide access to the network 112 for various client devices to which it is communicating. In some cases, wireless access point 101 can include integrated routing functionality. In other cases, the wireless access point 101 merely couples the client devices to a wired or other network without including routing functionality. The wireless access point 101 can also relay data between various client devices that are on the wireless network facilitated by the access point 101. The access point system 103 can represent one or more applications, services, and/or processes that interact with various hardware components in the wireless access point 101, such as a wireless local area network controller, antenna systems, baseband processors, etc., to implement routing functionality, firewall functionality, network address translation (NAT) functionality, and/or other functionality

The security application 105 is executed by the wireless access point 101 to implement the generation, administration, and/or revocation of authentication credentials generated for visiting client devices as described herein. The security application 105 can also implement one or more wireless security protocols, such as, but not limited to, WPA, WPA2, and other protocols as can be appreciated. The master pre-shared key 107 comprises a password, passphrase, or other credential with which client devices may access a network facilitated by the access point system 103. The client table 109 can comprise data such as revocable keys 111 regarding temporary or revocable credentials associated with client devices accessing the network. Revocable keys 111 comprise data from which authentication credentials, such as pairwise keys, can be generated by the security application 105 according to various embodiments of the disclosure. Session keys 119 can comprise data from which session based authentication credentials, such as pairwise keys, can be generated by the security application 105

Additionally, wireless access point 101 can also implement one or more group policies that can be defined by a group policy 121. Such a group policy 121 can take the form of a group multicast policy. In such a scenario, the group policy 121 can comprise one or more entries corresponding to clients that are members of the group. The group policy 121 can also comprise one or more corresponding revocable keys 123, which are also data from which authentication credentials, such as pairwise keys, can be generated by the security application 105 according to various embodiments of the disclosure. Accordingly, one or more members of the group can be removed from by revocation of a revocable key 123 that corresponds to the member from the group policy 121. The security application 105 can also periodically, particularly upon removal of a member from the group policy 121, initiate a rekeying event to force the various members of the group as well as the wireless access point 101 to generate new pairwise keys derived from the revocable key 123. In this way, the security application 105 can ensure that only authorized members of a group policy 121 can communicate with the wireless access point 101.

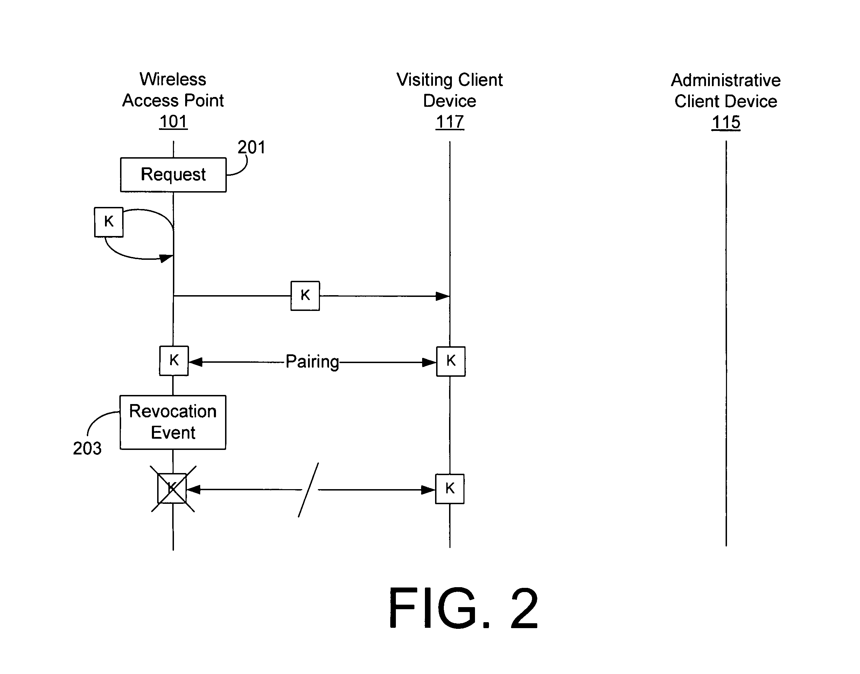

Various types of client devices can exchange data with the access point 101. In the example of FIG. 2, a home client device 113, an administrative client device 115, and a visiting client device 117 are shown. Any of these client devices is representative of a plurality of type client or computing devices that may be coupled to the network 112 via the access point 101. The clients may comprise, for example, a processor-based system such as a computer system and/or mobile device. Such computer system may be embodied in the form of a desktop computer, a laptop computer, a personal digital assistant, a cellular telephone, a smartphone, set-top box, music players, web pads, tablet computer systems, game consoles, optical disc players, or any other devices with like capability. The clients can be configured with wireless capability that enables communication with the access point 101. The clients may also implement any of the various IEEE 802.11 standards that facilitate wireless communications as well as wireless security.

Accordingly, a wireless access point 101 according to an embodiment of the disclosure can allow a user (e.g., an administrative user who administers the wireless access point 101, a homeowner to whom the access point belongs, etc.) to issue or authorize the access point 101 to issue temporary and/or revocable credentials to access a wireless network. In the context of FIG. 1, a home client device 113 is representative of one or more client devices that an owner or administrator of a wireless network desires to establish a persistent or permanent connection with the network. Accordingly, the master pre-shard key 107 can be established and shared with the home client device 113. The home client device 113 and wireless access point 101 can use the master pre-shared key 107 to perform a handshake process and/or generate pairwise key(s) for use in a wireless security protocol as can be appreciated.

As an alternative, a home client device 113 and the wireless access point 101 can also be paired by employing WPS or similar protocols that facilitate the configuring of security information between an access point 101 and client device. Accordingly, a WPS session can be initiated by activating a physical or virtual button on the wireless access point 101, which can facilitate setup of security information used by a wireless security protocol such as WPA, WPA2, etc. In a wireless network secured using the WPA2 protocol, for example, the home client device 113 and access point 101 can be paired by exchanging information in a WPS session.

Therefore, embodiments of the disclosure can leverage wireless security protocols such as WPA and/or WPA2 as well as initialization protocols such as WPS to facilitate a scheme that allows issuance of temporary credentials and/or revocable credentials. In one embodiment, the security application 105 can receive a request from or on behalf of a visiting client device 117 to connect to a wireless network associated with a SSID advertised by the wireless access point 101. Such a request can be obtained by the security application 105 as an initiation of a WPS session to pair the vising client device 117 and the access point 101 so that the visiting client device 117 can access a wireless network facilitated by the access point 101.

Accordingly, the security application 105 can generate a revocable key 111 that is different from the master pre-shared key 107. The revocable key 111 can be unique to the visiting client device 117 and based upon a unique identifier associated with the device. For example, the revocable key 111 can be based upon information received from the visiting client device 117 in a WPS session. In some embodiments, the revocable key 111 can be a value that is generated with a hash function that takes as an input any amount of data that can be uniquely associated with the visiting client device 117 and received by the access point 101 as a part of a request to connect to the wireless network. In this way, the security application 105 can provide for granting temporary access that is controlled at the layer 2 level of the Open Systems Interconnection (OSI) model in contrast to other schemes that are controlled at the layer 3 level, which is the case with many publicly accessible wireless networks (e.g., airports, coffee shops, etc.). Therefore, the security application 105 can prevent unauthorized clients on the network from even exchanging packets with the wireless access point 101 and other client devices on the network, whereas access controlled at the layer 3 level may allow an unauthorized client to exchange data with the access point as well as other clients.

In one embodiment, the access point 101 can provide a pairwise master key to the visiting client device 117 that is derived from the revocable key 111 that is uniquely associated with the visiting client device 117. Subsequently, both the visiting client device 117 and the access point 101 can derive pairwise transient key that are used to encrypt data exchanges between the device and access point 101 from the pairwise master key that is based upon the revocable key 111. In this way, the access point 101 can provide an authentication credential to the visiting client device 117 that is not based upon the master pre-shared key 107, but one that is based on a different key.

Similarly, the security application 105 can also generate a session key 119 on behalf of a client, from which pairwise master keys can be generated and provided to the visiting client device 117. A session key 119 can represent an authentication credential that is generated for a particular communication session with the wireless access point 101, such as in the case of a voice over internet protocol (VoIP) session. Accordingly, a visiting client device 117 can be revoked at a user level by removing the revocable key 111 or a session level by removing the session key 119 and their associated pairwise master keys.

In some embodiments, the security application 105, upon obtaining a request on behalf of a visiting client device 117 to join the wireless network, can transmit a request to obtain authorization to permit the visiting client device 117 to join the network to an administrative client device 115. Such a request to obtain authorization can be transmitted via e-mail, short message service (SMS), or any other type of messaging as specified by an administrative user. Accordingly, the request can include identifying information provided by the visiting client device 117, such as device parameters, a username provided by a user of the visiting client device 117, or any other information that can facilitate identification of a visiting client device 117.

Accordingly, upon presentation of an authorization request to an administrative client device 115, an administrative user can approve or deny the request. Upon approval, the security application 105 can generate a revocable key 111 for the visiting client device 117 and any pairwise keys or other authentication credentials derived from called for by a wireless security protocol employed by the access point 101 to secure the network. Additionally, an administrative user can, via an administrative client device 115, initiate revocation of the revocable key 111 if the administrative user no longer wishes the visiting client device 117 to have access to the wireless network. In this way, from the point of view of the visiting client device 117, the security application 105 implements a standard wireless security protocol while, in fact, the security application 105 is issuing the visiting client device 117 authentication credentials with which to access the network that are temporary and/or revocable as well as potentially granted and/or revoked by an administrative user.

Therefore, the access point 101 can revoke the authentication credential provided to the visiting client device 117 at a later time by simply revoking the revocable key 111. In other words, the security application 105 can remove the revocable key 111 from the client table 109 or mark the key as revoked, which can cause the access point system 103 to refuse to route or acknowledge packets transmitted from the visiting client device 117 upon revocation. In this sense, upon detecting a revocation event, the security application 105 revokes the revocable key 111 and the visiting client device's access to the wireless network facilitated by the wireless access point 101.

A revocation event can occur in many forms. The security application 105 can be configured to revoke a revocable key 111 associated with a visiting client device 117 upon expiration of a time period as well as exceeding a bandwidth usage cap. The time period and/or bandwidth usage cap can be predefined, preconfigured by an administrative user, and/or specified by an administrative user upon granting a request from the security application 105 to provide the visiting client device 117 with authentication credentials to access the wireless network.

Reference is now made to FIGS. 2-4, which illustrate various non-limiting examples of how the security application 105 executed by the wireless access point 101 can administer a wireless network according to various embodiments of the disclosure. FIG. 2 illustrates one example of data flow between a wireless access point 101 as well as a visiting client device 117. As shown in FIG. 2, a request 201 transmitted by or on behalf of the visiting client device 117 to gain access to a wireless network via the access point 101 is obtained by the security application 105. As noted above, such a request can be received as a part of a WPS session. Upon receiving such a request, the security application can generate a revocable key 111 and/or other authentication credential that is unique to the visiting client device 117.

The revocable key 111 and/or any other information according to a wireless security protocol is transmitted to the visiting client device 117. Accordingly, the wireless access point 101 and visiting client device 117 can complete a pairing process based at least upon the revocable key 111. Upon detection of a revocation event 203, the security application 105 can revoke the revocable key 111 and disassociate the wireless access point 101 from the visiting client device 117. The illustration shown in FIG. 2 can, from the point of view of the visiting client device 117, appear as a typical WPS configuration of wireless security parameters associated with WPA and/or WPA2 wireless security involving a pre-shared key. In this sense, the request 201 can be obtained as a result of activating a physical or virtual button associated with initialization of a WPS session. However, the pre-shared key upon which the pairing between visiting client device 117 and access point 101 is based is not the master pre-shared key 107 as described above.

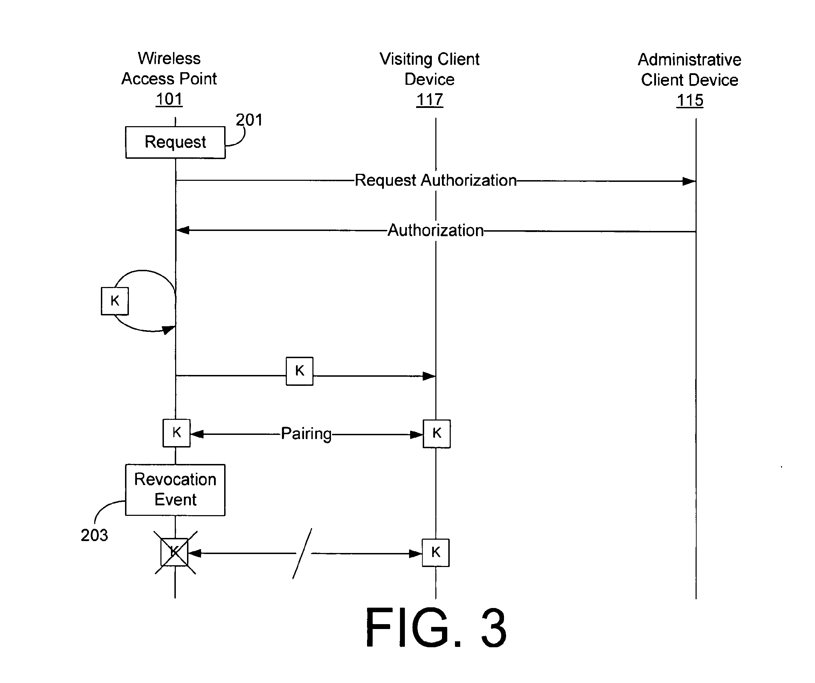

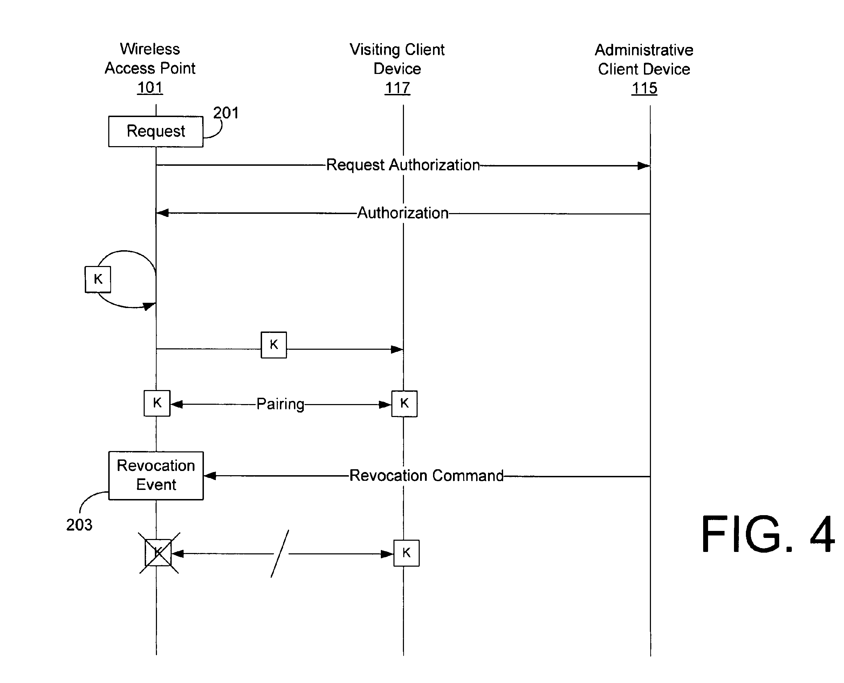

Reference is now made to FIG. 3, which illustrates an alternative example of a pairing between a visiting client device 117 and wireless access point 101 according to an embodiment of the disclosure. FIG. 3 illustrates how, upon obtaining a request 201 from or on behalf of a visiting client device 117 to join the network, the security application 105 can request authorization from an administrative client device 115 for an administrative user to authorize the visiting client device 117 to join the network. Upon receiving authorization from the administrative client device 115, the security application 105 can generate a revocable key 111 associated with the visiting client device 117 and transmit an authentication credential to the visiting client device 117 as is described above. FIG. 4 illustrates an additional variation on the examples whereby the administrative client device 115 can issue a revocation command to the wireless access point 101, which can revoke one or more revocable keys 111 and corresponding authentication credentials associated with visiting client devices 117. In this way, an administrative user can manage the access of visiting client devices 117 that have access to the wireless network.

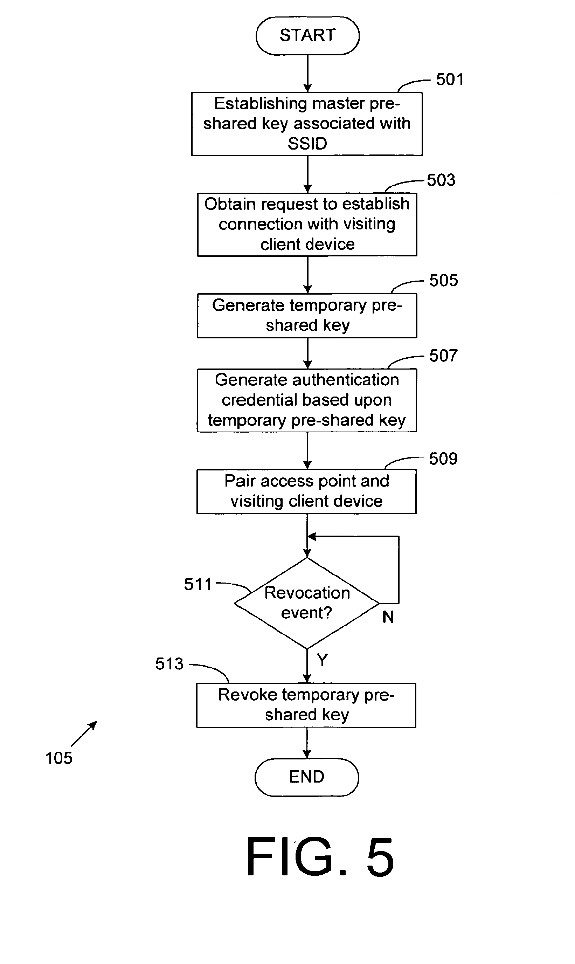

Referring next to FIG. 5, shown is a flowchart that provides one example of the operation of a portion of the security application 105 (FIG. 1) that can be executed in the wireless access point 101 (FIG. 1) according to various embodiments. It is understood that the flowchart of FIG. 5 provides merely an example of the many different types of functional arrangements that may be employed to implement the operation of the portion of the security application 105 as described herein. As an alternative, the flowchart of FIG. 5 may be viewed as depicting an example of steps of a method implemented in the wireless access point 101 according to one or more embodiments.

First, in box 501, the wireless access point 101 can establish a master pre-shared key associated with a particular wireless network SSID. The master pre-shared key can comprise a key according to various wireless security protocols (WPA, WPA2, etc.) from which authentication credentials for home client devices 113 are derived. In box 503, the security application 105 can obtain a request to establish a connection to a visiting client device 117 (FIG. 1). As noted above, the request can be associated with initiation of a WPS session. In box 505, the security application 105 can generate a revocable key 111. The revocable key 111 can be unique to the visiting client device 117 so that any other devices on the network are associated with a different pre-shared key, whether it be the master pre-shared key 107 or another revocable key 111.

In box 507, the security application 105 can generate an authentication credential based upon the revocable key 111. Depending upon the type of wireless security protocol implemented by the wireless access point 101, the authentication credential can merely be the revocable key 111 itself, other keys or data derived from the revocable key 111, or other information as can be appreciated. In box 509, the security application 105 can pair the wireless access point 101 with the visiting client device 117 based upon the generated authentication credentials. If a subsequent revocation event is detected in box 511, then in box 513, the security application 105 can revoke the revocable key 111 such that the wireless access point 101 and visiting client device 117 are no longer paired.

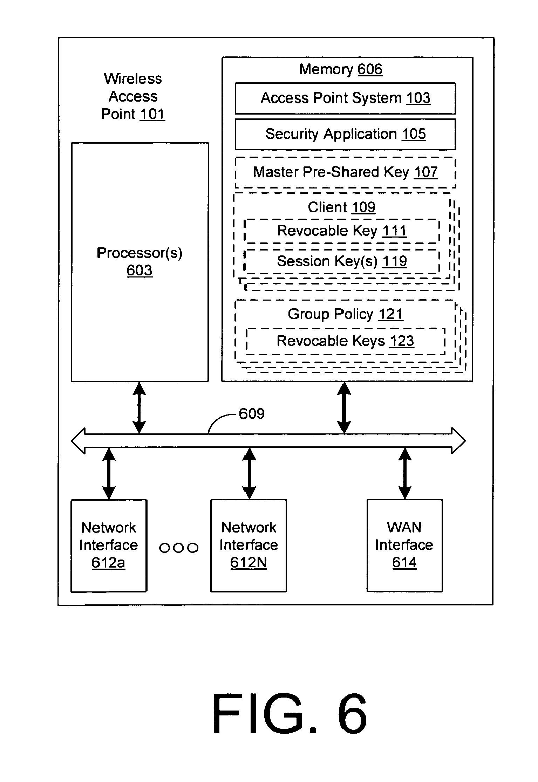

FIG. 6 illustrates one example of a schematic block diagram of a wireless access point 101 according to an embodiment of the present disclosure. The wireless access point 101 includes at least one processor circuit, for example, having a processor 603 and a memory 606, both of which are coupled to a local interface 609. To this end, the wireless access point 101 may comprise, for example, at least one general-purpose computing device, at least one embedded computing device, a router, a switch, and/or any other device that may be coupled to a network 112 (FIG. 1). The local interface 609 may comprise, for example, one or more data buses with an accompanying address/control bus or other bus structure as can be appreciated. Also coupled to the local interface 309 may be one or more wireless network interfaces 612a ... 612N and a local area network (LAN) interface 614. The LAN interface 614 is used to connect the gateway 109 to the network 112 (FIG. 1).

Stored in the memory 606 are both data and several components that are executable by the processor 603. In particular, stored in the memory 606 and executable by the processor 603 are the access point system 103, security application 105, and potentially other applications. Also stored in the memory 606 may be the master pre-shared key 107, a client table 109 including one or more revocable keys 111, and other data. In addition, an operating system may be stored in the memory 606 and executable by the processor 603. In various embodiments, all or portions of the access point system 103 and security application 105 may correspond to digital logic that is not executed separately by a processor 603.

Referring back to FIG. 5, it is understood that there may be other applications that are stored in the memory 606 and are executable by the processor 603 as can be appreciated. Where any component discussed herein is implemented in the form of software, any one of a number of programming languages may be employed such as, for example, C, C++, C#, Objective C, Java^{®}, JavaScript^{®}, Perl, PHP, Visual Basic^{®}, Python^{®}, Ruby, Delphi^{®}, Flash^{®}, or other programming languages.

A number of software components can be stored in the memory 606 and are executable by the processor 603. In this respect, the term "executable" means a program file that is in a form that can ultimately be run by the processor 603. Examples of executable programs may be, for example, a compiled program that can be translated into machine code in a format that can be loaded into a random access portion of the memory 606 and run by the processor 603, source code that may be expressed in proper format such as object code that is capable of being loaded into a random access portion of the memory 606 and executed by the processor 603, or source code that may be interpreted by another executable program to generate instructions in a random access portion of the memory 606 to be executed by the processor 603, etc. An executable program may be stored in any portion or component of the memory 606 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 606 is defined herein as including both volatile and nonvolatile memory and data storage components. Volatile components are those that do not retain data values upon loss of power. Nonvolatile components are those that retain data upon a loss of power. Thus, the memory 606 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 603 may represent multiple processors 603 and the memory 606 may represent multiple memories 606 that operate in parallel processing circuits, respectively. In such a case, the local interface 609 may be an appropriate network that facilitates communication between any two of the multiple processors 603, between any processor 603 and any of the memories 606 or between any two of the memories 606, etc. The local interface 609 may comprise additional systems designed to coordinate this communication, including, for example, performing load balancing. The processor 603 may be of electrical or of some other available construction.

Although the access point system 103, security application 105, and various other systems described herein may be embodied in software or code executed by general purpose hardware as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, or other components, etc. Such technologies are generally well known by those skilled in the art and, consequently, are not described in detail herein.

The flowchart of FIG. 5 shows the functionality and operation of an implementation of one example of the security application 105. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor 603 in a computer system or other system. The machine code may be converted from the source code, *etc*. If embodied in hardware, each block may represent a circuit or a number of interconnected circuits to implement the specified logical function(s).

Although the flowchart of FIG. 5 shows a specific order of execution, it is understood that the order of execution may differ from that which is depicted. For example, the order of execution of two or more blocks may be scrambled relative to the order shown. Also, two or more blocks shown in succession in FIG. 5 may be executed concurrently or with partial concurrence. Further, in some embodiments, one or more of the blocks shown in FIG. 5 may be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure.

Also, any logic or application described herein, including the access point system 103, security application 105, or any other data or processes discussed herein, that comprises software or code can be embodied in any non-transitory computer-readable medium for use by or in connection with an instruction execution system such as, for example, a processor 603 in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

It should be emphasized that the above-described embodiments of the present invention are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of this disclosure and the present invention and protected by the following claims.
Therefore, having thus described the invention, at least the following is claimed:

## Claims

1. A wireless access point, comprising:
at least one processor; and
a security application executable by the at least one processor, and security application comprising:
logic that establishes a master pre-shared key associated with a wireless network, the wireless network associated with a service set identifier (SSID);
logic that obtains a request to establish a connection to the wireless network with a client device;
logic that generates a revocable key for the client device, the revocable key being different from the pre-shared key;
logic that generates an authentication credential based at least upon the revocable key;
logic that transmits an authentication credential to the client device, the authentication credential based at least upon the revocable key;
logic that determines whether a revocation event occurs with respect to the client; and
logic that revokes the revocable key upon occurrence of the revocation event.

2. The system of claim 1, wherein the security application further comprises logic that obtains an administrative authorization to grant access to the wireless network to the client device prior to transmitting the authentication credential to the client device.

3. The system of claim 1, wherein the security application further comprises:
logic that determines a unique identifier associated with the client device; and
wherein the revocable key is based at least upon the unique identifier.

4. The wireless access point of claim 1, wherein the authentication credential comprises a pairwise master key.

5. The wireless access point of claim 1, wherein the revocable key is uniquely associated with the client device, the revocable key generated by the security application.

6. The system of claim 1, wherein the logic that obtains the request from the client device to establish the connection to the wireless network further comprises logic that obtains a request to initiate a session in which an authentication credential is generated by the at least one processor and transmitted to the client device.

7. A system of claim 6, wherein the session further comprises a Wi-Fi protected setup session.

8. The wireless access point of claim 1, wherein the security application further comprises logic that secures the wireless network by employing a wireless security protocol, the wireless security protocol comprising one of: Wi-Fi Protected Access and Wi-Fi Protected Access II.

9. The wireless access point of claim 8, wherein the security application further comprises logic that establishes a communication session associated with the client device, the communication session comprising an encrypted wireless communication session, wherein the encrypted wireless communication session is encrypted using the authentication credential.

10. The wireless access point of claim 1, wherein the logic that determines whether a revocation event occurs with respect to the client further comprises:
logic that tracks an amount of data usage associated with the client device on the wireless network;
logic that determines whether the data usage exceeds a usage cap; and
logic that identifies a revocation event when the data usage exceeds the usage cap.

11. The wireless access point of claim 1, wherein the logic that determines whether a revocation event occurs with respect to the client further comprises:
logic that identifies an amount of time elapsed since generating the authentication credential based at least upon the revocable key;
logic that determines whether the amount of time exceeds a predefined threshold; and
logic that identifies a revocation event when the amount of time exceeds the predefined threshold.

12. The wireless access point of claim 1, wherein the logic that determines whether a revocation event occurs with respect to the client further comprises logic that receives a revocation command associated with at least one of the revocable key and the authentication credential.

13. A method, comprising the steps of:
establishing, in a wireless access point, a master pre-shared key associated with a wireless network, the wireless network associated with a service set identifier (SSID);
obtaining, in the wireless access point, a request to establish a connection to the wireless network with a client device;
generating, in the wireless access point, a revocable key for the client device, the revocable key being different from the pre-shared key;
generating, in the wireless access point, an authentication credential based at least upon the revocable key;
transmitting, in the wireless access point, an authentication credential to the client device, the authentication credential based at least upon the revocable key;
determining, in the wireless access point, whether a revocation event occurs with respect to the client; and
revoking, in the wireless access point, the temporary key upon occurrence of the revocation event.

14. The method of claim 13, further comprising the step of obtaining, in the wireless access point, an administrative authorization to grant access to the wireless network to the client device prior to transmitting the authentication credential to the client device.

15. A system, comprising:
means for establishing a master pre-shared key associated with a wireless network, the wireless network associated with a service set identifier (SSID);
means for obtaining a request to establish a connection to the wireless network with a client device;
means for generating a revocable key for the client device, the revocable key being different from the pre-shared key;
means for generating an authentication credential based at least upon the revocable key;
means for transmitting an authentication credential to the client device, the authentication credential based at least upon the revocable key;
means for determining whether a revocation event occurs with respect to the client; and
means for revoking the temporary key upon occurrence of the revocation event.
